# EUROPEAN PATENT SPECIFICATION

(11) **EP 1 818 158 B1**
(45) Date of publication and mention of the grant of the patent: **17.11.2010**
(21) Application number: 07075114.4
(22) Date of filing: 09.02.2007
(51) Int. Cl.: B29C 49/56, B29C 49/04, B29C 49/78

(54) **Machine for moulding plastic containers with linear-rack means for moving the mould-carrying unit**
Maschine zum Formen von Kunststoffbehältern mit geradlinigen Haltemitteln zum Bewegen der Formträgereinheit
Machine pour le moulage de récipients en plastique avec des moyens de crémaillère linéaire pour l'unité support de moule

(30) Priority: 13.02.2006 IT MI20060253
(43) Date of publication of application: 15.08.2007
(73) Proprietor: Magic MP S.p.A., Carate Brianza (MI) (IT)
(72) Inventor: Giacobbe, Ferruccio, Carate Brianza (MI) (IT)
(74) Representative: Raimondi, Margherita

(56) References cited:
- EP-A- 0 913 244
- EP-A- 1 306 193
- DE-A1- 19 528 751
- GB-A- 1 185 162
- US-B1- 6 692 686

## Description

The present invention relates to a machine for blow-moulding plastic containers, equipped with a linear-rack device for movement of the mould-carrying unit.

It is known that in the technical sector relating to the packaging of liquid products and the like there exists the need to manufacture containers made of plastic material suitable for this purpose.

It is also known that said containers are formed in suitable blow-moulding machines provided with corresponding moulds (formed by two half-moulds which are movable so as to open and close) into which a tube of plastic material extruded upstream of the mould is introduced and blown.

Also known from EP 1 591 226 in the name of the same present Applicant is a machine for moulding containers made of plastic material, comprising a unit for extruding tubes of plastic material, a blowing unit and a mould for holding the containers, formed by two half-moulds movable, upon actuation of associated first means, in a longitudinal direction symmetrically with respect to a fixed axis perpendicular to the said longitudinal direction, the entire unit formed by the mould and by the associated first actuating means being movable, upon actuation of associated second actuating means, in a transverse direction from a first position, corresponding to positioning of the mould below the extrusion unit, to a second position corresponding to positioning of the mould below the blowing unit, and vice versa, said second actuating means consisting of a linear motor.

Example of the prior art according to the preamble of claim 1 are disclosed into EP 1306 193.

Although performing its function, such a machine nevertheless requires the various electrical parts to be designed with larger dimensions owing to the high masses which must be displaced with very sudden accelerations and decelerations required in order to keep the displacement idle time within the limits permitted by the machine cycle for moulding a part.

In addition to this, in conventional machines, actuation of the mould head is performed by means of mechanical transmissions which are the cause of vibrations which do not allow accurate centring of the mould seats with the blowing injectors, particularly in the case of multiple heads in respect of which centring is correct solely for some of them, while the other heads are off-centre with respect to the corresponding injector, resulting in a large amount of production waste.

The technical problem which is posed, therefore, is to provide a machine for blow-moulding plastic containers from extruded tubes, which is able to allow easy and rapid adaptation thereof to variations in the form of the mould and/or the interaxial distance between the extruded tubes to be blow-moulded, without the need for major conversation of the base machine.

In connection with this problem it is also required that such a machine should be able to allow the correct relative centring of the associated injector/mould also in the case of multiple heads, should have small dimensions, allow easy assembly and access to the various parts and allow a substantial reduction in routine maintenance operations.

These objects are achieved according to the present invention by a machine for moulding containers, according to the characteristics of claim 1.

Further details may be obtained from the following description of a non-limiting example of embodiment of the subject of the present invention, provided with reference to the accompanying drawings in which:
- Figure 1 is a schematic front view of the machine according to the invention during removal of the extruded tubes;
- Figure 2 is a partially sectioned side view of the machine according to Figure 1 with the mould open;
- Figure 3 is a schematic front view of the machine according to the invention during the moulding step;
- Figure 4 is a partially sectioned side view of the machine according to Figure 3 with the mould closed;
- Figure 5 is a schematic top plan view of the device for actuating the opening/closing movement of the mould;
- Figure 6 shows the operating sequence relating to a first form/interaxial distance of the mould/extruded tubes and;
- Figure 7 shows the different setting of the machine in relation to a second different form/interaxial distance of the mould/extruded tubes.

As shown, the machine according to the invention envisages a support frame comprising uprights 1 and cross members 1a which have, fastened thereto, the means 2 for extruding the tube 3 of plastic material, the first means 100 for opening/closing the mould 4 in the longitudinal direction X-X, the second means 200 for moving the mould 4 in the transverse direction Y-Y, the blowing nozzles 5 and the means 7 for evacuating the moulded containers 3a.

Said mould 4 is formed by two half-moulds 4a, 4b which are symmetrically arranged with respect to a fixed reference axis of symmetry Z-Z and integral with respective flanges 104a,104b mounted on a pair of guides 6, with a circular cross-section, connected to the structure 1 by means of the support flanges 101 which are in turn integral with guides 102 sliding on rails 103 fixed to the frame 1.

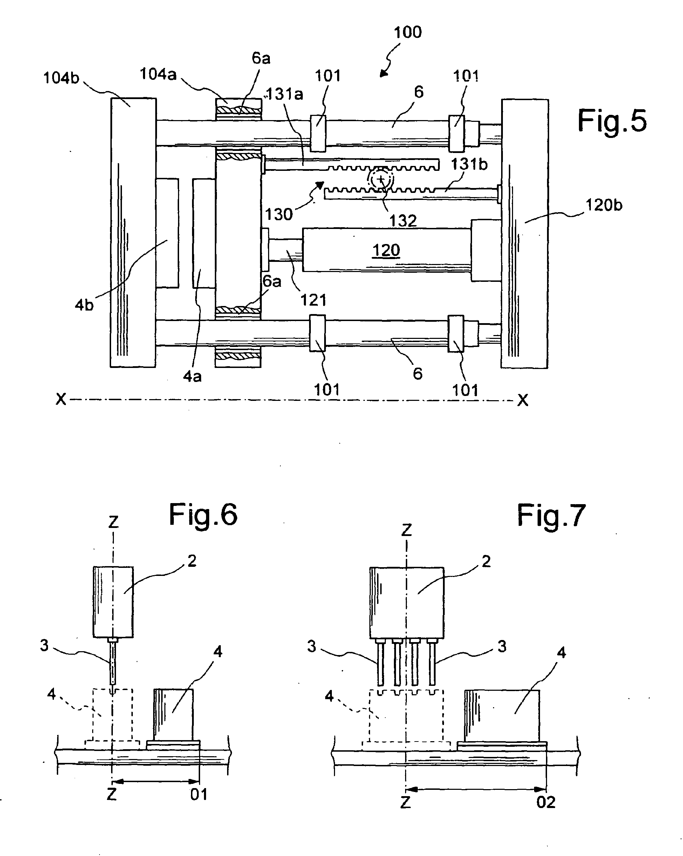

In greater detail (Fig. 5), said means 100 for opening/closing the two half-moulds 4a,4b in the longitudinal direction X-X comprise an oil-hydraulic cylinder 120 which is arranged parallel to the axis X-X and is integral with a displaceable plate 120b.

The rod 121 of the cylinder 120 is directly connected to one of the two half-mould support flanges, 104a and 4a, respectively, in the example, while the other half-mould 4b support flange 104b is connected by means of the two circular guides 6 to the plate 120b with which it forms a single body.

Said guides 6 pass through the flange 104a via a bush 6a.

The plate 120b and the flange 104a have, arranged between them, a synchronization mechanism 130 able to produce the symmetrical movement of the second half-mould 4b with respect to the first half-mould 4a and consequently the symmetrical opening/closing of the mould 4 with respect to the fixed vertical reference axis Z-Z.

Said synchronization mechanism 130 comprises a first rack 131b integral with the plate 120b and able to engage with a gear wheel 132 which meshes also with a second rack 131a integral with the flange 104a.

With this configuration the displacement, in either direction, of the rod 121 of the cylinder 120 causes a displacement, in one direction, of the half-mould 4a and a displacement by the same amount, but in the opposite direction, of the half-mould 4b by means of the movement of the synchronization device 130 which causes displacement of the entire unit consisting of plate 120b, guides 6, flange 104b carrying the half-mould 4b as well as the displacement, in the opposite direction, of the flange 104a operated by the rod 121 of the cylinder 120.

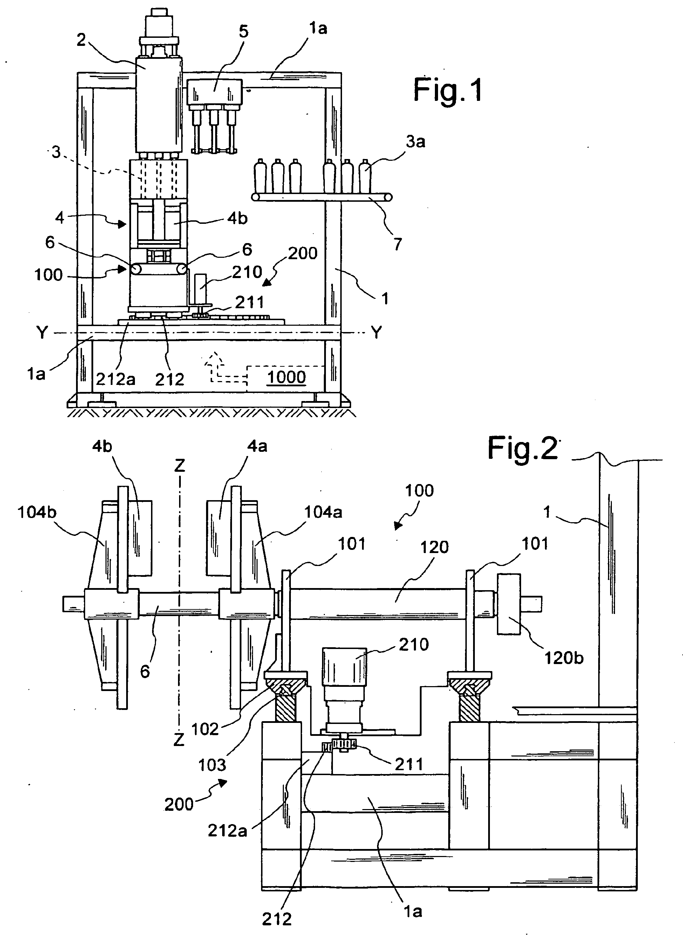

Said devices 200 for displacing the mould unit in the transverse direction Y-Y (Fig. 2) consist of at least one gearmotor 210, the shaft of which has, mounted thereon, a pinion 211 able to engage with a linear rack 212 arranged parallel to the transverse axis Y-Y and fixed to one of the cross members 1a of the structure 1 of the machine, optionally with the arrangement of a support 212a in between.

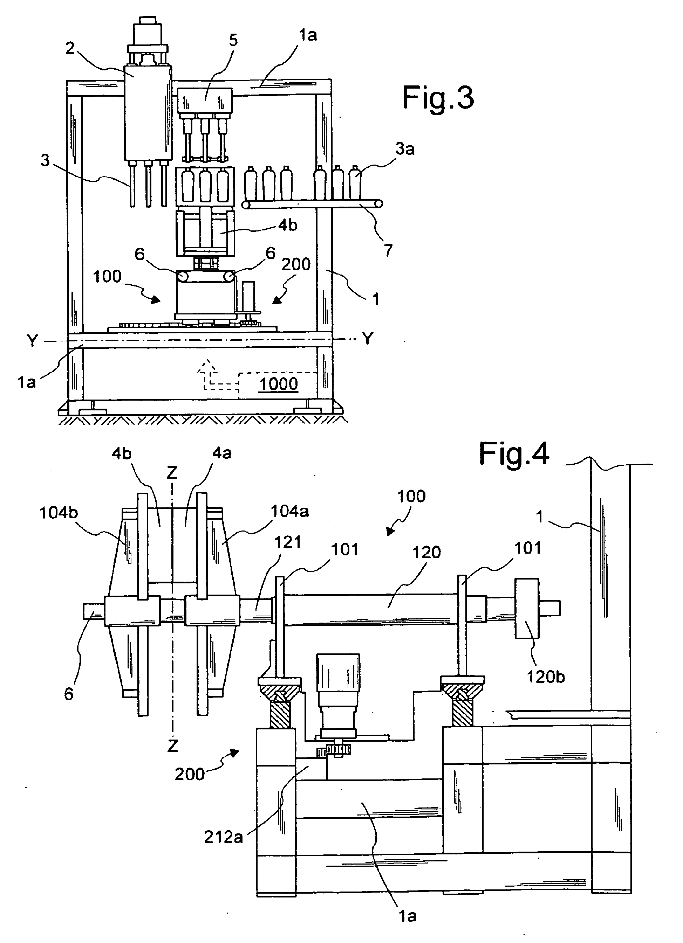

With this configuration and as shown in Figs. 1-4, the movements of the mould are performed as follows:
- in a sequence which is coordinated and controlled by suitable programming and control means 1000;
- the cylinder 120 is operated (Figs. 1,2) so as to produce a pulling/pushing force on the flanges 104b,104a so that they are respectively pushed/pulled symmetrically away from the axis Z-Z so as to cause opening of the two half-moulds 4a, 4b.
- the entire mould-carrying unit 4 is brought underneath the extruded tubes 3 of plastic material by means of the actuating means 200;
- the cylinder 120 is operated in the opposite direction to the previous direction so that the flanges 104b,104a are pulled/pushed towards the axis of symmetry Z-Z so as to cause closing of the two half-moulds 4a,4b on the tubes 3;
- the gearmotor 210 is operated so that rotation of the gear wheel 211 on the rack 212 causes displacement in the transverse direction Y-Y of the entire moulding unit underneath the blow-moulding station 5 where moulding of the containers is performed;
- the first actuating means 100 are again operated so as to cause opening of the two half-moulds 4a,4b;
- removal of the moulded containers 3a is performed, conveying them away by means of associated evacuation means 7; and
- a new cycle is started, following the sequence described above.

From Figs. 6 and 7 it can also be seen how, with the device 200 comprising gearmotor 210 and linear rack 212, it is possible to vary with extreme ease the starting point 01,02 of the transverse travel of the mould 4 from the position where it is aligned with the axis Z-Z of the extruded tubes 3, to the position where it is aligned with the axis of the blow-moulding station 5, making it possible to use the same machine both in the case of a single extruded tube (Fig. 6) and in the case of several extruded tubes (Fig. 7), and vice versa, and also in the case of a same number of tubes with a different interaxial distance, optimizing the production cycle owing to the reduction in the idle time due to the displacement of the mould-carrying unit.

In addition to this, the machine according to the present invention also allows the moulding of a varying number of containers without having to employ a different machine with dimensions especially designed depending on the different number of containers to be moulded.

Moreover, it is pointed out how, with the machine according to the invention, it is also possible to increase the speed of displacement of the mould-carrying unit in the transverse direction, increasing also the precision with which the mould is positioned relative to the blowing nozzles, this being a factor of considerable importance for reducing the waste in the event of multiple heads for which centring using conventional means is problematic, as well as ensure a high degree of versatility and precision also for those containers with a neck which is not straight and coaxial, but oriented in inclined directions with respect to the longitudinal axis of the container itself, in which cases conventional machines require complicated and imprecise deformation of the blowing nozzle support tubes.

In addition to this, owing to the presence of the cylinder 120 for performing opening/closing of the mould, it is possible to eliminate the pre-stressing devices for closing thereof, which are envisaged in conventional machines in order to adjust the shearing force required in each case depending on the measurement of the linear extension of the waste which is eliminated during closing of the mould.

It is envisaged, moreover, that the gearmotor 210 may be controlled by means of the programming devices - schematically indicated by 1000 in Fig. 1 - which may be of the electromechanical, electronic and/or processing program type.

## Claims

1. Machine for moulding containers (3a), comprising a unit (2) for extruding tubes (3) made of plastic material, a blowing unit (5) and a mould (4) for holding the containers (3a), formed by two half-moulds (4a,4b) movable, upon actuation of associated first means (100), in a longitudinal direction (X-X) and symmetrically with respect to a fixed axis (Z-Z) perpendicular to said longitudinal direction, the unit formed by the mould (4) and by the associated first actuating means (100) being movable, upon actuation of second actuating means (200), in a transverse direction (Y-Y), from a first position where it is substantially aligned with the extrusion unit (2) to a second position where it is substantially aligned with the blowing unit (5) and vice versa, **characterized in that** said second means (200) for actuating the mould (4) in the transverse direction comprise at least one motor (210) which has a gear wheel (211) able to engage with a fixed linear rack (212); **in that** said motor (210) is a gearmotor with a shaft which has, mounted thereon, a pinion (211) able to mesh with the said linear rack (212) to give a continuous movement of the mould along the transversal direction (Y-Y),
**in that** said rack (212) is arranged parallel to the transverse axis (Y-Y) **in that** it comprises programming devices (1000) for controlling the movement means (100,200) and **in that** the starting point of the transverse travel in variable.

2. Machine according to Claim 1, **characterized in that** said half-moulds (4a,4b) are integral with respective flanges (104a,104b) mounted on a pair of guides (6).

3. Machine according to Claim 2, **characterized in that** said guides (6) have a circular cross-section.

4. Machine according to Claim 2, **characterized in that** said guides (6) are connected to the structure (1) by means of the support flanges (101).

5. Machine according to Claim 4, **characterized in** guides (102) sliding on rails (103) fixed to the frame (1).

6. Machine according to Claim 1, **characterized in that** said rack (212) is fixed to one of the cross members (1a) of the structure (1) of the machine.

7. Machine according to Claim 1, **characterized in that** said first means (100) for opening/closing the two half-moulds (4a,4b) comprise at least one oil-hydraulic cylinder (120) arranged parallel to the axis (X-X) and integral with a displaceable plate (120b).

8. Machine according to Claim 7, **characterized in that** the rod (121) of the cylinder (120) is directly connected to one (104a) of the two half-mould support flanges (104a,104b), while the other flange (104a) carrying the half-mould (4b) is connected by means of the two circular guides (6) to the plate (120b) with which it forms a single body.

9. Machine according to Claim 8, **characterized in that** said guides (6) pass through the flange (104a) via corresponding bushes (6a).

10. Machine according to Claim 8, **characterized in that** a synchronization mechanism (130) able to produce the symmetrical movement of the second half-mould (4b) with respect to the first half-mould (4a) is arranged between the plate (120b) and the flange (104a).

11. Machine according to Claim 10, **characterized in that** said synchronization mechanism (130) comprises a first rack (131b) integral with the plate (120b) and able to engage with a gear wheel (132) which also meshes with the teeth of a second linear rack (131a) integral with the flange (104a).

12. Machine according to Claim 1, **characterized in that** said programming devices (1000) are of the electromechanical, electronic and/or processing program type.

## Patentansprüche

1. Maschine zum Formen von Behältern (3a), umfassend eine Einheit (2) zum Extrudieren von aus Kunststoff hergestellten Rohren (3), eine Blaseinheit (5) und eine Form (4) zum Halten der Behälter (3a), gebildet durch zwei Formhälften (4a, 4b), welche nach Betätigung von zugeordneten ersten Mitteln (100), in einer Längsrichtung (X-X) und symmetrisch relativ zu einer festen zur Längsrichtung (X-X) orthogonalen Achse (Z-Z) bewegbar sind, wobei die durch die Form (4) und durch die zugeordneten ersten Betätigungsmittel (100) gebildete Einheit nach Betätigung von zweiten Betätigungsmitteln (200) in einer Querrichtung (Y-Y) von einer ersten Position, in der sie im Wesentlichen mit der Extrudiereinheit (2) ausgerichtet ist, in eine zweite Position bewegbar ist, in der sie im Wesentlichen mit der Blaseinheit (5) ausgerichtet ist und umgekehrt, **dadurch gekennzeichnet, dass** die zweiten Mittel (200) zur Betätigung der Form (4) in der Querrichtung mindestens einen Motor (210) umfassen, welcher ein Zahnradrad (211) hat, das für einen Eingriff in eine feste lineare Zahnstange (212) geeignet ist; dass der Motor (210) ein Getriebemotor mit einer Welle ist, welche, daran angebracht, ein für den Eingriff in die lineare Zahnstange (212) geeignetes Ritzel (211) hat, um der Form eine kontinuierliche Bewegung entlang der Querrichtung (Y-Y) zu verleihen, und dass die Zahnstange (212) parallel zur Querachse (Y-Y) angeordnet ist, dass sie Programmiereinrichtungen (1000) zur Steuerung der Bewegungsmittel (100, 200) umfasst und dass der Startpunkt des Querverfahrwegs variabel ist.

2. Maschine nach Anspruch 1, **dadurch gekennzeichnet, dass** die Formhälften (4a, 4b) integral mit entsprechenden, an einem Paar von Führungen (6) montierten Flanschen (104a, 104b) sind.

3. Maschine nach Anspruch 2, **dadurch gekennzeichnet, dass** die Führungen (6) einen kreisförmigen Querschnitt haben.

4. Maschine nach Anspruch 2, **dadurch gekennzeichnet, dass** die Führungen (6) mit der Struktur (1) mittels der Stützflansche (101) verbunden sind.

5. Maschine nach Anspruch 4, **gekennzeichnet durch** Führungen (102), welche auf am Rahmen (1) befestigten Schienen (103) gleiten.

6. Maschine nach Anspruch 1, **dadurch gekennzeichnet, dass** die Zahnstange (212) an einem der Querträger (1 a) der Struktur (1) der Maschine befestigt ist.

7. Maschine nach Anspruch 1, **dadurch gekennzeichnet, dass** die ersten Mittel (100) für das Öffnen/Schließen der zwei Formhälften (4a, 4b) mindestens einen ölhydraulischen Zylinder (120) umfassen, welcher parallel zur Achse (X-X) angeordnet und integral mit einer verschiebbaren Platte (120b) ist.

8. Maschine nach Anspruch 7, **dadurch gekennzeichnet, dass** die Stange (121) des Zylinders (120) direkt mit einem (104a) der zwei Formhälften-Stützflansche (104a, 104b) verbunden ist, während der andere die Formhälfte (4b) tragende Flansch (104b) mittels der zwei kreisförmigen Führungen (6) mit der Platte (120b) verbunden ist, mit welcher er einen einzelnen Körper bildet.

9. Maschine nach Anspruch 8, **dadurch gekennzeichnet, dass** die Führungen (6) den Flansch (1 04a) via entsprechende Büchsen (6a) passieren.

10. Maschine nach Anspruch 8, **dadurch gekennzeichnet, dass** ein Synchronisierungsmechanismus (130), welcher dazu geeignet ist, eine symmetrische Bewegung der zweiten Formhälfte (4b) relativ zu der ersten Formhälfte (4a) herzustellen, zwischen der Platte (120b) und dem Flansch (104a) angeordnet ist.

11. Maschine nach Anspruch 10, **dadurch gekennzeichnet, dass** der Synchronisierungsmechanismus (130) eine erste Zahnstange (131b) umfasst, welche integral mit der Platte (120b) ist und geeignet ist, in ein Zahnradrad (132) einzugreifen, das auch mit den Zähnen einer zweiten mit dem Flansch (104a) integralen Zahnstange (131 a) im Eingriff ist.

12. Maschine nach Anspruch 1, **dadurch gekennzeichnet, dass** die Programmierungsvorrichtungen (1000) vom elektromechanischen, elektronischen und/oder Prozessprogramm-Typ sind.

## Revendications

1. Machine pour le moulage de récipients (3a), comprenant une unité (2) permettant d'extruder des tubes (3) faits de matière plastique, une unité de soufflage (5) et un moule (4) pour maintenir les récipients (3a), formée par deux moitiés de moule (4a, 4b) mobiles, lors de l'actionnement de premiers moyens associés (100), dans une direction longitudinale (X-X) et symétriquement par rapport à un axe fixe (Z-Z) perpendiculaire à ladite direction longitudinale, l'unité formée par le moule (4) et par les premiers moyens d'actionnement associés (100) pouvant se déplacer, lors de l'actionnement de second moyens d'actionnement (200), dans une direction transversale (Y-Y), à partir d'une première position dans laquelle elle est essentiellement alignée avec l'unité d'extrusion (2) vers une seconde position dans laquelle elle est essentiellement alignée avec l'unité de soufflage (5) et vice versa, **caractérisée en ce que** lesdits seconds moyens (200) pour actionner le moule (4) dans la direction transversale comportent au moins un moteur (210) qui possède une roue d'engrenage (211) pouvant s'engager avec une crémaillère linéaire fixe (212) ; **en ce que** ledit moteur (210) est un moteur à engrenage doté d'un arbre qui présente, monté sur lui, un pignon (211) capable de s'engrener avec ladite crémaillère linéaire (212) pour fournir un déplacement continu du moule le long de la direction transversale (Y-Y), **en ce que** ladite crémaillère (212) est disposée parallèlement à l'axe transversal (Y-Y), **en ce qu'**elle comprend des dispositifs de programmation (1000) pour commander les moyens de déplacement (100, 200) et **en ce que** le point de départ du déplacement transversal est variable.

2. Machine selon la revendication 1, **caractérisée en ce que** lesdites moitiés de moule (4a, 4b) sont solidaires de brides respectives (104a, 104b) montées sur une paire de guides (6).

3. Machine selon la revendication 2, **caractérisée en ce que** lesdits guides (6) présentent une section transversale circulaire.

4. Machine selon la revendication 2, **caractérisée en ce que** lesdits guides (6) sont connectés à la structure (1) au moyen des brides de support (101).

5. Machine selon la revendication 4, **caractérisée en ce que** les guides (102) coulissent sur des rails (103) fixés sur le bâti (1).

6. Machine selon la revendication 1, **caractérisée en ce que** ladite crémaillère (212) est fixée sur l'un des éléments transversaux (1a) de la structure (1) de la machine.

7. Machine selon la revendication 1, **caractérisée en ce que** lesdits premiers moyens (100) pour ouvrir/fermer les deux moitiés de moule (4a, 4b) comportent au moins un cylindre hydraulique à huile (120) agencé parallèlement à l'axe (X-X) et solidaire d'une plaque pouvant se déplacer (120b).

8. Machine selon la revendication 7, **caractérisée en ce que** le corps (121) du cylindre (120) est directement raccordé à l'une (104a) des brides de support des deux moitiés de moule (104a, 104b), tandis que l'autre bride (104b) portant la moitié de moule (4b) est raccordée au moyen de deux guides circulaires (6) à la plaque (120b) avec laquelle elle forme une pièce unique.

9. Machine selon la revendication 8, **caractérisée en ce que** lesdits guides (6) passent à travers la bride (104a) par l'intermédiaire de boîtes de glissement correspondantes (6a).

10. Machine selon la revendication 8, **caractérisée en ce qu'**un mécanisme de synchronisation (130) capable de produire le déplacement symétrique de la seconde moitié de moule (4b) par rapport à la première moitié de moule (4a) est agencé entre la plaque (120b) et la bride (104a).

11. Machine selon la revendication 10, **caractérisée en ce que** ledit mécanisme de synchronisation (130) comprend une première crémaillère (131b) solidaire de la plaque (120b) et capable de s'engager avec une roue d'engrenage (132) qui s'engrène également avec les dents d'une seconde crémaillère linéaire (131 a) solidaire de la bride (104a).

12. Machine selon la revendication 1, **caractérisée en ce que** lesdits dispositifs de programmation (1000) sont du type électromécanique, électronique et/ou à programme de traitement.
